# EUROPEAN PATENT APPLICATION

(11) **EP 1 281 307 A1**
(43) Date of publication of application: **05.02.2003**
(21) Application number: 02255415.8
(22) Date of filing: 01.08.2002
(51) Int. Cl.: A01B 73/04, A01D 78/10

(54) **Agricultural implement**

(30) Priority: 01.08.2001 GB 0118746
(71) Applicant: Moate, George, Clayton, Doncaster DN5 7DF (GB)
(72) Inventor: Moate, George, Clayton, Doncaster DN5 7DF (GB)
(74) Representative: Lockey, Robert Alexander

(57) **Abstract**

An agricultural implement (10) comprising;
a support part (12),
a first operating part (13) mounted on the support part to be movable between an operating position and a stored position, and provided with a first driven element (38),
a second operating part (14) mounted on the support part to be movable between an operational position and a stored position and provided with a second driven element (39),
wherein a drive means (23) is provided on the support part and is connected to the first driven element by a first coupling means (50) and to the second driven element by a second coupling means (51).

## Description

### Description of Invention

This invention relates to an agricultural implement and particularly but not exclusively to a rotary cultivator or tiller.

Conventionally, prior to planting potatoes or other root crops, it is necessary to prepare suitable soil beds in the form of parallel strips. Tractor-mounted rotary cultivators or tillers are known which are operable to prepare suitable beds mechanically, driven by a conventional power take-off provided on the tractor. A potato bed conventionally has a width of about 1.8 metres, and to reduce labour costs and preparation time, it is know to provide a rotary cultivator having three operating parts each operable to prepare one bed and driven from the power takeoff. Such a three operating-part rotary cultivator however requires a complex drive train. To permit such a rotary cultivator to be transported by road, it is necessary for the operating parts to be movable from a deployed operating position to a stored position, and it is necessary to disconnect the couplings which transfer drive to the operating parts to permit movement of the operating parts to the stored position. The three operating parts are generally deployed in a triangular configuration, with two forward operating parts disposed either side of the apparatus and a rear operating part disposed centrally of the apparatus. This of necessity requires that the rotary cultivator be heavy and project rearwardly of the tractor for some distance, causing an undesirable downward force at the rear of the tractor.

An aim of the present invention is to provide a new or improved agricultural implement.

According to a first aspect of the invention we provide an agricultural implement comprising a support part, a first operating part mounted on the support part to be movable between an operating position and a stored position, and provided with a first driven element, a second operating part mounted on the support part to be movable between an operating position and a stored position and provided with a second driven element, wherein a drive means is provided on the support part and is connected to the first driven element by a first coupling means and to a second driven element by a second coupling means.

When the first operating part and second operating part are in the respective operating positions, the first driven element and second driven element may extend substantially continuously.

The first coupling means and the second coupling means may permit movement of the first operating part and the second operating part between their operating positions and their stored positions.

The coupling means may comprise a universal joint.

The coupling means may comprise a coupling shaft provided with a universal joint at each end thereof,

A clutch may be connected between the coupling means and the driven element.

The coupling shaft may comprise a first shaft part and a second shaft part, the first shaft part and second shaft part being connected by a slidable splined coupling.

A drive shaft may be provided connected between the coupling means and the driven element.

The drive shaft and the driven element may be offset and a drive transfer means maybe provided connected between the drive shaft and the driven element.

The drive transfer means may be disposed on the operating part at an end part thereof distant from the support part.

The drive means may comprise a gear box having a drivable input.

The gear box may comprise a first output and a second output, wherein the first driven element is drivably connected to the first output and the second driven element is drivably connected to the second output.

The first operating part and second operating part may be pivotally mounted on the support part.

The first operating part and second operating part may be movably mounted on the support part such that when the first operating part and second operating part are in their respective operating position, at least a part of the first operating part and a part of the second operating part may extend below the support part.

The agricultural implement may comprise lift means operable to move the first operating part and the second operating part between their respective operating position and stored position.

The lift means may comprise a first fluid pressure operated ram means extending between the support part and the first operating part, and a second fluid pressure operated ram means extending between the support part and the second operating part.

The agricultural implement may be provided with ridging means.

Each operating part may be provided with ridging means comprising an inner ridging part and an outer ridging part, the ridging parts being disposed such that when the first operating part and second operating part are in their respective operating positions, the ridging parts are generally equally spaced.

The agricultural implement may comprise mounting means to enable the apparatus to be mounted on a vehicle.

The agricultural implement may comprise a three-bed tiller.

Each driven element may comprise a rotor.

The invention will now be described by way of example only with reference to the accompanying drawings wherein;
Figure 1 is a perspective view from the rear and to one side of an agricultural implement embodying the present invention,
Figure 2 is a perspective view from the front and to one side of the agricultural implement of Figure 1,
Figure 3 is a side view of the agricultural implement of Figure 1,
Figure 4 is a rear view of the implement of Figure 1 in a stored position,
Figure 5 is a perspective view on a larger scale of part of the implement of Figure 1.
Figure 6 is a rear view of a further agricultural implement embodying the present invention, and
Figure 7 is a rear view of the agricultural implement of Figure 6 in a stored position.

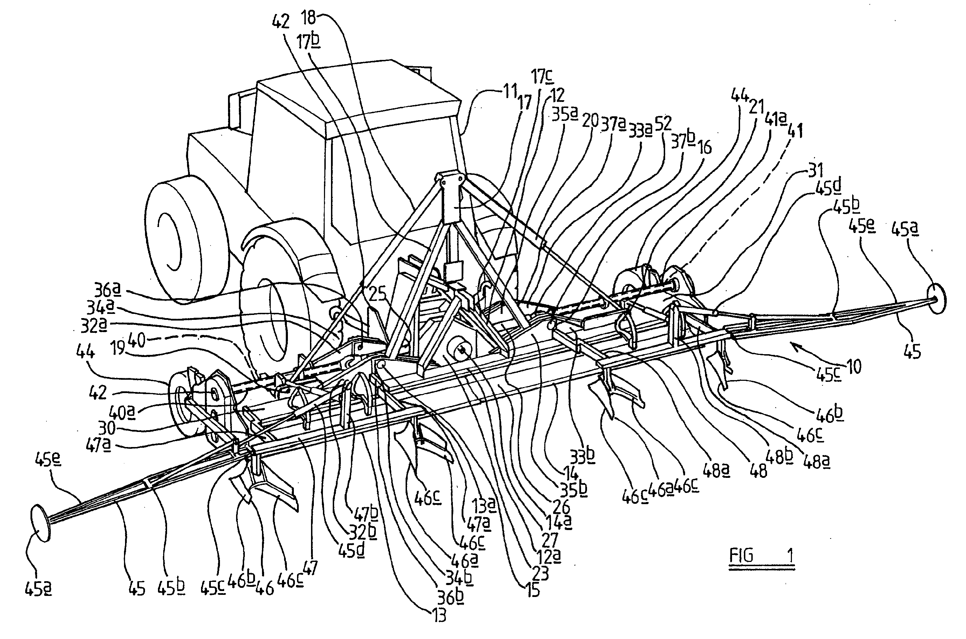

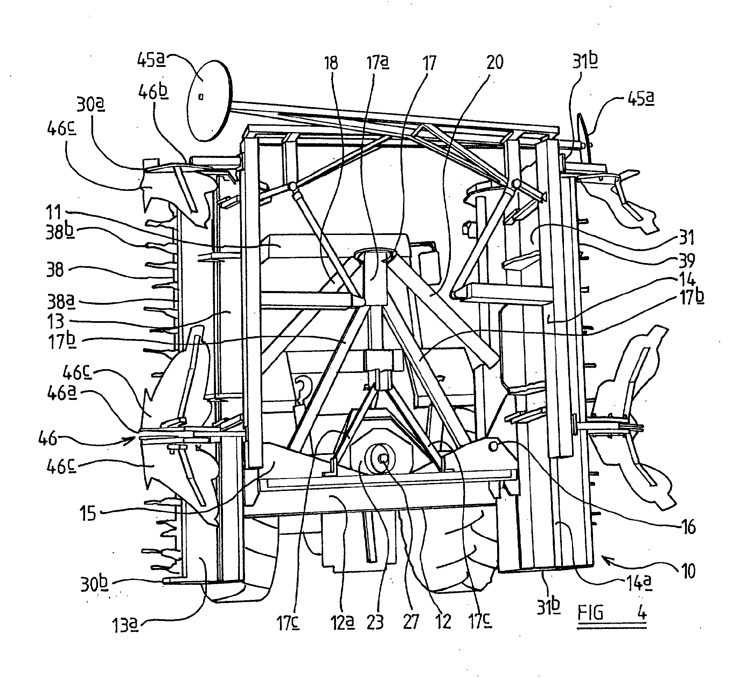

Referring to Figures 1 to 5, an agricultural implement embodying the present invention is generally shown at 10, in the present example mounted on a tractor 11 as shown in Figures 1 and 4. The apparatus 10 comprises a support part generally indicated at 12, a first operating part 13 and a second operating part 14. The first operating part 13 is mounted on the support part 12 by first pivot means 15, and the second operating part 14 is movably mounted on the support part 12 by second pivot means 16. The support part 12 comprises a base part 12a which is provided with an upright part 17. The upright part 17 comprises a head part 17a comprising a generally vertical member, connectable to the base part 12a by a first, upper part of struts 17b and a second lower pair of struts 17c. Attached to the head part 17a of the upper part 17 is a lift means comprising a first fluid operated ram 18 which is pivotally connected by connection means 19 to the first operating part 13, and a second fluid pressure operated ram 20 which is pivotally connected by connection means 21 to the second operating part 14.

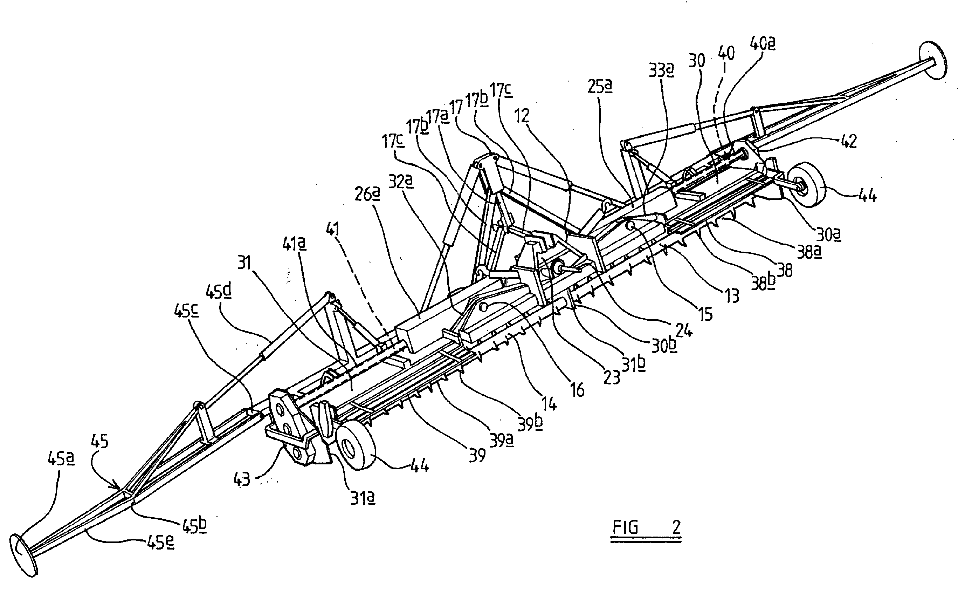

Mounted on the base part 12a of the support part 12 in the space between the lower pair of struts 17c is a drive means comprising a gear box 23. The gear box 23 comprises an input 24 operable to engage a power takeoff of the tractor 11, and a pair of outputs which drive a first output shaft 25 and a second output shaft 26. As shown in Figure 2, the output shafts 25, 26 in use are preferably protected by shaft covers 25a, 26a. As is apparent from Figures 1 and 4, the gear box 23 is further provided with a rear power take off connection 27 to enable further devices to be driven by the apparatus.

The first operating part 14 and the second operating part 14 each comprise a elongate base element 30, 31 respectively on which are provided a pair of generally triangular spaced pivot members 32a, 32b, 33a, 33b. The pivot members 32a, 32b, 33a, 33b are generally triangular in side view and are disposed such that the direction of taper is towards the end of the respective operating part 13, 14 distant from the support part 12. Each pivot member 32a, 32b, 33a, 33b is received in the respective pivot means 15, 16 of the support part 12. The pivot means 15, 16 comprises four pairs of space plates, 34a, 34b, 35a, 35b. Each pivot member 32a, 32b, 33a, 33b is received between a respective pair of support plates 34a, 34b, 35a, 35b, and a locking pin 36a, 36b, 37a, 37b passes through the plate pair 34a, 34b, 35a, 35b, through the respective pivot member 32a, 32b, 33a, 33b. The pins 36a, 36b are generally coaxial, as are the pins 37a, 37b. Each operating part 13, 14 is therefore supported on and pivotally connected to the support part 12 by the respective pivot member, plate pair and pin.

The pivot members 32a, 32b, 33a, 33b are disposed part way along the length of the respective operating part 13, 14 and at an upper part thereof when the operating parts 13, 14 are in their operating position. The respective pivot means 15, 16 are located such that, when the operating parts 13, 14 are in their operating position as seen in Figure 1, the operating parts 13, 14 extend substantially continuously and an end part 13a, 14a of the respective operating part is disposed beneath the support part 12. As seen in Figure 4, when the operating parts 13, 14 are in their lifted, stored position, the end parts 13a, 14a, depend generally downwardly from the pivot means 15, 16.

Downwardly depending from the upper members 30, 31 of each operating part 13, 14 is an outer end plate 30a, 31a adjacent an end part thereof and an inner end part 30b, 31b, adjacent another end thereof. The outer end plates 30a, 31a are disposed at the end of the operating part 13, 14 relatively distant from the pivot means 15, 16. Rotatably supported on the end plates 30a, 30b, 31a,31b is a driven member 38, 39 in the present example comprising a driven element shaft 38a, 39a provided with a plurality of blades 38b, 39b. Provided on each operating part 13, 14 is a drive shaft 40, 41 located within a respective drive shaft cover 40a, 41a. The respective driven element 38, 39 and drive shaft 40, 41 are connected by transfer cases 42, 43 disposed the end of each operating part 13, 14 distant from the support part 12. Each drive shaft 40, 41 is connected to a respective output shaft 25, 26 of the gear box 23 by a coupling means 50, 51 located between the pivot members 32a, 32b, 33a, 33b as will be described below in more detail.

It will be apparent that each operating part 13, 14 may be provided with such auxiliary equipment as may be necessary for the operation which the agricultural implement is required to perform. In the present example, the operating parts 13, 14 are provided with depth wheels 44 adjacent the end thereof, guide disks 45 and ridging means generally indicated at 46.

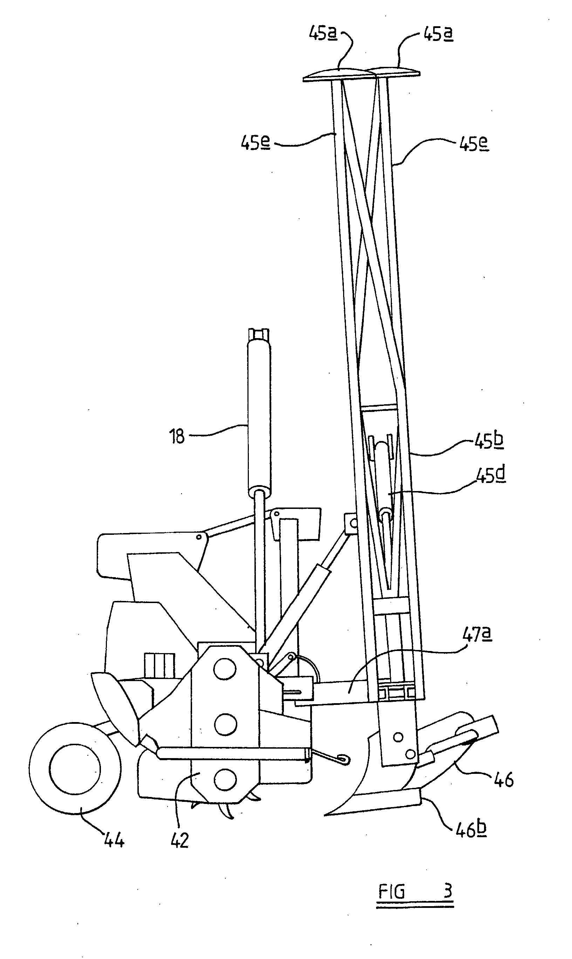

As seen in the Figures, the operating parts 13, 14 are each provided with an auxiliary support part 47, 48 which is connected to the respective operating part 13, 14 by generally horizontal rearwardly extending members 47a, 48a. The respective guide disk 45 and ridging means 46 are mounted on the respective auxiliary support part 47. Each guide disk assembly 45 comprises a guide disk 45a and a guide disk support 45b which is pivotally connected to the respective auxiliary support by pivot means 45a. Provided on each auxiliary support part 47, 48 is an upstanding part 47b, 48b to which is pivotally connected a respective disk lift means 45d comprising a fluid operated ram. Each disk support part 45b is provided with a head part 45e of generally triangular configuration. It is desirable that the head parts 45e are disposed in the opposite sense to one another, such that the disks 45a are offset in a direction forwardly of the implement 10, as best seen in Figure 3.

With reference to the ridging means 46, in the present example where the agricultural implement 10 comprises a three-bed tiller, it is necessary that three distinct beds be defined by the implement. Each operating part 13, 14 is provided with a inner ridger 46a and an outer ridger 46b. The inner ridgers 46a each comprise a pair of ridger blade parts 46c disposed facing generally outwardly of one another. Each outer ridger 46b is provided with a single ridger blade part 46c which faces towards the respective inner ridger 46a. The ridger means 46 are disposed such that when the operating means 13, 14 are in their respective lowered, operating position, the space between each outer ridger 46b, and its adjacent inner ridger 46a, and between the inner ridgers 46a of each operating part 13, 14 is generally equal, such that passage of the agricultural implement 10 through the soil defines three generally equally sized soil beds.

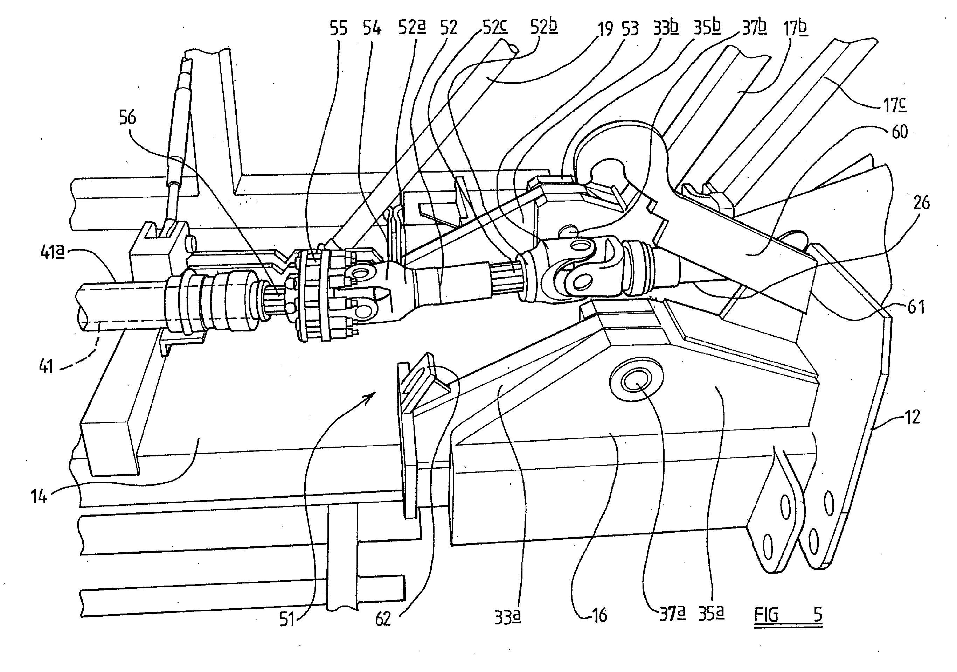

The coupling means 50, 51 will now be described in more detail with reference to Figure 5. Figure 5 shows the coupling means 51 from a forward direction of the agricultural implement 10, and it will be apparent that the coupling means 50 will simply have a mirror image of the same structure.

Referring now to Figure 5, the second operating part 14 extends generally from the left of the picture and the support part 12 extends generally to the right of the picture. The lift ram means 19 and the struts 17b, 17c of the upright part 17 can be seen in the background. The structure of the pivot means 16 is clearly apparent. The spaced pivot members 33a 33b of the operating part 14 are received between spaced plate pairs 35a, 35b provided on the support part 12 and are connected thereto by pins 37a, 37b. To the right of the Figure extends the second output shaft 26, and to the left of the picture the drive shaft 41 is shown in dashed outline received within the shaft cover 41a.

As can be seen from the Figure, the coupling means 51 comprises a coupling shaft 52 having a first shaft part 52a and a second shaft part 52b. The first shaft part 52a and second shaft part 52b are relatively slidably connected by splines 52c on the second shaft part 52b which are received in a corresponding internally splined part (not shown) of the first shaft part 52a. The shaft 52 is connected to the second output shaft 26 by a universal joint 53. The first shaft part 52a is provided with a further universal joint 54 which is connected to the drive shaft 41 by a clutch 55, in the present example comprising a slip clutch of standard type. The slip clutch 55 is mounted on a splined connecting part 56 of the drive shaft 41.

To maintain the operating part 14 in its stored position, the support part 12 is provided with a hook 60 pivotally connected at 61 to the support part 12. The operating part 14 is provided with a latch part 62 disposed to engage the hook 61 when the operating part 14 is in its stored position.

In operation, as shown in Figures 1 and 2 the operating parts 13, 14 are lowered such that the ends parts 13a, 14a extend under the support part 12 such that the operating parts 13, 14 abut or are adjacent and such that the driven elements 38, 39 extend substantially continuously across the agricultural implement 10. In this context, "substantially continuously" is intended to means that the end-most blades 38b, 39b of the driven elements 38, 39 are spaced such that the soil or bed disposed centrally of the agricultural implement 10 is worked as if a single driven element were operating across its full width. In this example, it will be apparent that the inner plates 30b, 31b, of the operating parts 13, 14 abut and the driven elements 38, 39 are supported on the inner end plate 30b, 31b such that the spacing between the end most blade 38b, 39b of the driven element 38, 39 is generally the same as that between adjacent blades on each driven element 38, 39.

The agricultural implement 10 is carried by the tractor 11 in a forward direction. As the agricultural implement 10 is moved in a forward direction, the soil is mechanically acted upon by the driven elements 28, 29 and then separated into three spaced beds by the ridging means 46. Although in Figure 1 and 2 both guide disks 45 are shown in a lowered position, in practice only that guide disk 45a extending into unworked soil would be deployed to provide a guide for the next transit of the tractor 11 and agricultural implement 10. When it is desired to move the agricultural implement 10, the disks 45a are lifted by retracting the disk lift means 45d such that the disk support parts 45b extend generally perpendicular to the auxiliary support parts 47, 48. The lift ram means 18, 19 are then retracted to cause operating parts 13, 14 to pivot about respective pivot means 15, 16 until they extend generally perpendicular relative to the base part 12a of the support part 12 as shown in Figure 4. As the end parts 45e of the disk support frames 45 are triangular in opposite senses, the disk support frames 45b pass one another without collision as seen in Figure 4. As seen in Figure 5, the second operating part 14 pivots relative to the support part 12 about pins 47b which are generally coaxial. The first universal joint 53 is disposed between the pins 37 and thus the shaft 52 can pivot with respect to the output shaft 26. The sliding connection of the first shaft part 52a and the second shaft part 52b, and the universal joint connection 54 between the shaft 52 and drive shaft 41 permits further relative movement between the drive shaft 41 and the output shaft 26, thus accommodating any problems of alignment between the shaft 41, 26 or between the pins 37b and the universal joint 53. By providing a pair of universal joints 53, 54, the effect of any misalignment between the drive shaft 51 and output shaft 26 when the operating part 14 is in its operating position are reduced.

When the operating part 14 is raised to its stored position, the hook 60 engages the latch 62 to maintain the operating part 14 in its stored position. An equivalent operation is performed on the first operating part 13.

Although auxiliary equipment comprising a depth wheel 44 guide disks assemblies 45 and ridging means 46 are shown, it will be apparent that such auxiliary equipment can be provided as desired and removably attached to the implement 10 depending on the operation which the agricultural implement 10 is to perform. The driven elements 38, 39 in the present example comprise rotors which are preferably releasably mounted on the respective operating parts 13, 14, but any other driven element may be provided as desired. In the particular example shown herein, the agricultural element 10 provides a three-bed tiller, that is three adjacent beds can be prepared and defined by the ridging means, but only requires the provision of two driven elements with attendant reduction in mechanical complexity. The agricultural implement 10 described herein thus easily be folded to a stored position such that the overall width of the implement 10 in the stored position is such that the agricultural implement 10 may be moved on public roads and may be quickly deployed into an operating position when desired.

The fluid pressure to be supplied to the ram means 18, 20 is preferably supplied from a conventional fluid pressure source, in the present example comprising a hydraulic pump, provided on the tractor 11 in conventional manner, and controllable by an operator of the cab 11 to move the operating parts 13, 14 between their operating and stored positions.

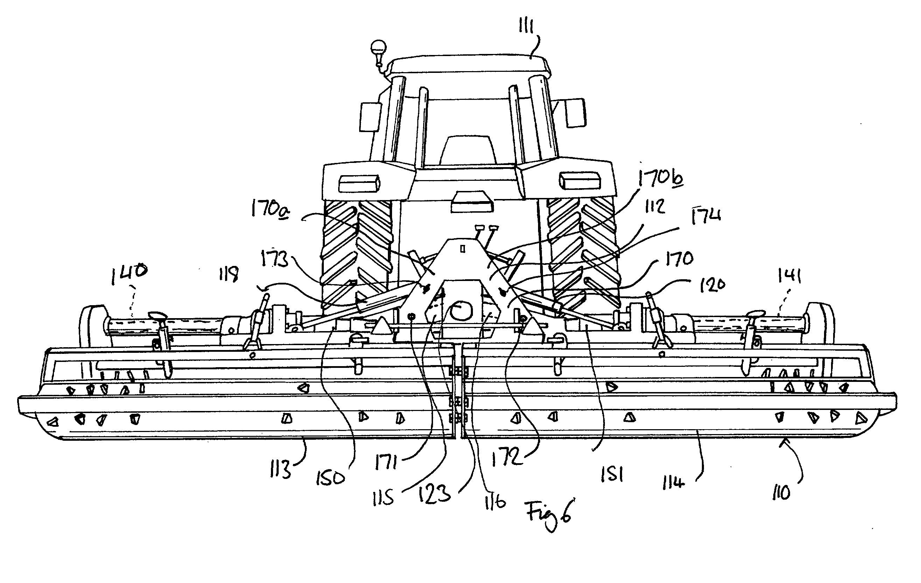

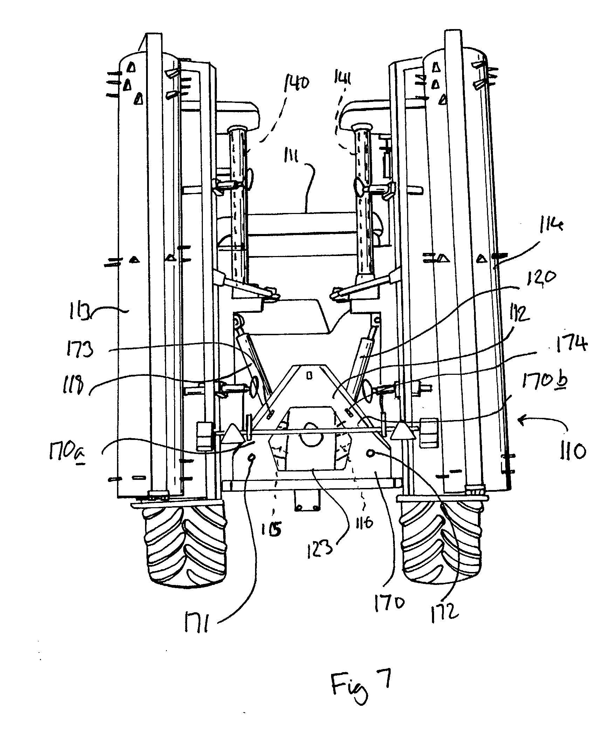

Referring now to Figures 6 and 7, a further agricultural implement embodying the present invention is shown. The implement is essentially the same as that of Figures 1 to 5 but where the support part is of reduced height. Corresponding elements in the implement of Figures 6 and 7 are given the same number as in Figures 1 to 5, prefixed with a "1".

Referring to Figures 6 and 7, an agricultural implement 110 is shown mounted on a tractor 111. The agricultural implement 110 comprises a generally triangular support part 112, a first operating part 113 and a second operating part 114. In this embodiment, the support part 112 comprises a generally triangular frame 170 having inclined side parts 170a, 170b. The first operating part 113 and second operating part 114 are pivotally connected to the frame 170 at pivot generally indicated at 171, 172. The operating parts 113, 114 are movable about the pivot 171, 172 between an operating position shown in Figure 6 and a stored position shown in Figure 7 in like manner to the embodiment of Figures 1 to 5.

To move the operating parts 113, 114 between their operating and store positions, a first ram means 118 is provided connected between the first operating part 113 and the frame 170, and a second fluid operated ram means 120 connected between the second operating part 14 and the frame 170. The fluid pressure operated rams 118, 120 are connected to the frame 170 at pivots 173, 174 respectively, the pivots 173, 174 being located at generally mid-way point of the inclined side parts 170a 170b of the frame 170.

As in the embodiment of Figures 1 to 5, a gearbox 123 is provided supported on the support part 112. The gearbox 123 comprises a input operable to engage a power take off the tractor 111 and a pair of outputs which drive a first output shaft 115 and second output shaft 116 each operable to drive a drive shaft 140, 141 respectively provided on the respective operating part 113, 114. The output shaft 125, 125 and drive shafts 140, 141 are connected by an appropriate coupling means 150, 151 in like manner to the embodiment of Figures 1 to 5.

In the embodiments of Figures 6 and 7 because the support part 112 is lower, there is less obstruction to the rearward visibility from the tractor 111. Because the fluid pressure operated rams 118, 120 are inclined at a lower angle to the corresponding operating part 113, 114, there is less mechanical advantage when moving the operating parts 113, 114 between their operating and stored positions. However, with a suitable choice of fluid pressure source and ram parameter, this can be overcome.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An agricultural implement comprising;
a support part,
a first operating part mounted on the support part to be movable between an operating position and a stored position, and provided with a first driven element,
a second operating part mounted on the support part to be movable between an operational position and a stored position and provided with a second driven element,
wherein a drive means is provided on the support part and is connected to the first driven element by a first coupling means and to the second driven element by a second coupling means.

2. An agricultural implement according to claim 1 wherein when the first operating part and second operating part are in their respective operating positions, the first driven element and second driven element extend substantially continuously.

3. An agricultural implement according to claim 1 or claim 2 wherein the first coupling means and the second coupling means permit movement of the first operating part and the second operating part between their operating positions and their stored positions.

4. An agricultural implement according to claim 3 wherein each coupling means comprises a universal joint.

5. An agricultural implement according to claim 4 wherein each coupling means comprises a coupling shaft provided with a universal joint at each end thereof.

6. An agricultural implement according to claim 5 wherein the coupling shaft comprises a first shaft part and a second shaft part, the first shaft part and second shaft part being connected by a slidable splined connection.

7. An agricultural implement according to any one of claims 3 to 6 wherein a clutch is connected between the coupling means and the respective driven element.

8. An agricultural implement according to any one of claims 3 to 7 wherein a drive shaft is provided connected between the coupling element and the driven element.

9. An agricultural implement according to claim 8 wherein the drive shaft and the driven element are offset and wherein a drive transfer means is provided connected between the drive shaft and the driven element.

10. An agricultural implement according to claim 9 wherein the drive transfer means is disposed on the operating part at an end part thereof distant from the support part.

11. An agricultural implement according to any one of the preceding claims wherein the drive means comprises a gear box having a drivable input.

12. An agricultural implement according to claim 11 wherein the gear box comprises a first output and a second output, wherein the first driven element is drivably connected to the first output and the second driven element is drivably connected to the second output.

13. An agricultural implement according to any one of the preceding claims wherein the first operating part and second operating part are pivotally mounted on the support part.

14. An agricultural implement according to any one of the preceding claims wherein the first operating part and second operating part are movably mounted on the support part such that when the first operating part and second operating part are in their respective operating positions, at least a part of the first operating part and a part of the second operating part extend below the support part.

15. An agricultural implement according to any one of the preceding claims comprising lift means operable to move the first operating part and the second operating part between their respective operating position and stored position.

16. An agricultural implement according to claim 15 wherein the lift means comprises a first fluid pressure operated ram means extending between the support part and the first operating part, and a second fluid pressure operated ram means extending between the support part and the second operating part.

17. An agricultural implement according to any one of the preceding claims further comprising ridging means.

18. An agricultural implement according to claim 17 wherein each operating part is provided with ridging means comprising an inner ridging part and an outer ridging part, the ridging parts being disposed such that when the first operating part and second operating part are in their operating position, the ridging parts are generally regularly spaced.

19. An agricultural implement according to any one of the preceding claims comprising mounting means to enable the apparatus to be mounted on a vehicle.

20. An agricultural implement according to any one of the preceding claims wherein each driven element comprises a rotor.

21. An agricultural implement according to any one of the preceding claims comprising a three-bed tiller.
